# EUROPEAN PATENT SPECIFICATION

(11) **EP 2 106 928 B1**
(45) Date of publication and mention of the grant of the patent: **20.02.2013**
(21) Application number: 09004377.9
(22) Date of filing: 26.03.2009
(51) Int. Cl.: B60B 27/00, F16C 19/18, F16C 43/04

(54) **Wheel rolling bearing assembly and manufacturing method thereof**
Radwälzlagereinheit und Verfahren zu deren Herstellung
Ensemble de roulement de roue et son procédé de fabrication

(30) Priority: 31.03.2008 JP 2008091971; 31.03.2008 JP 2008091972; 31.03.2008 JP 2008091973
(43) Date of publication of application: 07.10.2009
(73) Proprietor: JTEKT Corporation, Osaka-shi Osaka 542-8502 (JP)
(72) Inventor: Yokota, Tatsuya c/o JTEKT Corporation, Osaka-shi, Osaka 542-8502 (JP); Mori, Tatsuki c/o JTEKT Corporation, Osaka-shi, Osaka 542-8502 (JP); Seo, Nobuyuki c/o JTEKT Corporation, Osaka-shi, Osaka 542-8502 (JP); Takada, Yoshito JTEKT Corporation, Osaka-shi, Osaka 542-8502 (JP)
(74) Representative: Schaeberle, Steffen

(56) References cited:
- EP-A2- 1 722 115
- WO-A1-2009/028441
- DE-A1- 19 844 115
- JP-A- 2001 012 484
- US-B1- 6 250 811

## Description

### BACKGROUND OF THE INVENTION

### 1. Field of the Invention

The present invention relates to a rolling bearing assembly for wheel, and to a manufacturing method thereof.

### 2. Description of the Related Art

A type of a rolling bearing assembly for a wheel according to the preamble of claim 1 is decribed in Japanese Patent Application Publication No. 2001-12484 (JP-A-2001-12484). As shown in FIGs. 17 and 18, the rolling bearing assembly for a wheel includes an inner ring member ( wheel hub) 110 attached to a wheel, an outer ring member 120 fixed to a vehicle body side, a plurality of lines of rolling elements 132, 133, and cages 134, 135. An attachment flange 125 is formed on the outer peripheral surface of the outer ring member 120. A fitting tubular portion 126 which projects to be fitted into an attachment hole 104 of a vehicle body member (knuckle, carrier, etc.) 101 is formed at a portion of the outer ring member 120 which extends toward the vehicle inner side with respect to the attachment flange 125. The rolling bearing assembly for a wheel is attached to the vehicle body member 101 by fitting the fitting tubular portion 126 of the outer ring member 120 into the attachment hole 104 of the vehicle body member 101 and fastening the attachment flange 125 to the vehicle body member 101 with a bolt 105.

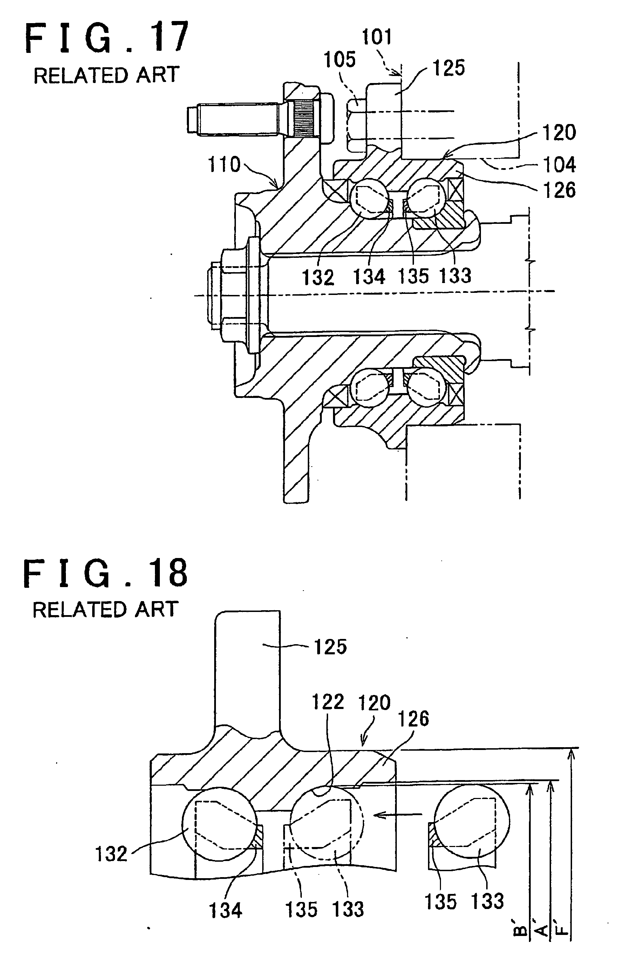

In the rolling bearing assembly for a wheel as shown in FIGs. 17 and 18, in assembling the plurality of rolling elements 133 and the cage 135 that holds the rolling elements 133 onto an outer ring raceway surface 122 of the outer ring member 120 positioned on the vehicle inner side, an assembly in which the rolling elements 133 are fitted into respective pockets of the cage 135 is inserted through an inner hole of the fitting tubular portion 126 of the outer ring member 120 until the assembly abuts on the outer ring raceway surface 122 of the outer ring member 120 positioned on the vehicle inner side, as shown in FIG. 18. Thus, defining the bore diameter of the fitting tubular portion 126 of the outer ring member 120 as A' and the circumscribed circle diameter of the rolling elements 133 (132) (which is equivalent to the maximum diameter of the outer ring raceway surface) as B', the relation A' ≥ B' must be satisfied. Meanwhile, in order to increase the rigidity (improve the bearing performance), the circumscribed circle diameter B' of the rolling elements 133 (132) may be increased and, accordingly, the number of the rolling elements 133 (132) may be increased or the diameter of the rolling elements 133 (132) may be increased. However, the outer diameter F' of the fitting tubular portion 126 of the outer ring member 120 must correspond to the attachment hole 104 of the vehicle body member 101, and thus cannot be changed. That is to say, the bore diameter A' cannot be increased because of the necessity to ensure the thickness of the fitting tubular portion 126 of the outer ring member 120. As a result, in the rolling bearing assembly for a wheel shown in FIG. 17, it is difficult to increase the circumscribed circle diameter B' of the rolling elements 133 (132) to be larger than the bore diameter A' of the fitting tubular member 126 in order to increase the rigidity.

### SUMMARY OF THE INVENTION

The present invention provides a rolling bearing assembly for a wheel in which the circumscribed circle diameter of rolling elements is increased to increase the rigidity without varying the outer diameter and the bore diameter of a fitting tubular portion of an outer ring member, and to provide a production method for the rolling bearing assembly.

An aspect of the present invention provides a rolling bearing assembly for a wheel including: an inner ring member attached to a wheel and having an inner ring raceway surface on an outer peripheral surface; an outer ring member having a fitting tubular portion at an inboard end portion of the outer ring member, whose the fitting tubular portion is fitted into an attachment hole of a vehicle body member, the outer ring member also having an outer ring raceway surface on an inner peripheral surface of the outer ring member; a plurality of rolling elements disposed between both the inner and outer ring raceway surfaces; and a cage that holds the plurality of rolling elements. A bore diameter B of the fitting tubular portion of the outer ring member is smaller a circumscribed circle diameter C of the rolling elements.

According to this aspect, the cage is inserted into the outer ring member, with the plurality of rolling elements arranged at regular intervals using a jig or the like on the outer ring raceway surface of the outer ring member, so that the plurality of rolling elements can be fitted in each pocket of the plurality of pockets of the cage, for assembly. Since the plurality of rolling elements and the cage is assembled onto the outer ring raceway surface of the outer ring member in this way, the circumscribed circle diameter C of the rolling elements can be set to be larger than the bore diameter B of the fitting tubular portion of the outer ring member. Then, the number of the rolling elements used can be increased or the diameter of the rolling elements can be increased for the increase in the circumscribed circle diameter C of the rolling elements. This increases the rigidity and improves the durability of the rolling bearing assembly for a wheel. In addition, the configuration also provides a weight reduction effect, because the weight of the outer ring member can be reduced for the increase in the circumscribed circle diameter C of the rolling elements, in other words, the maximum diameter of the outer ring raceway surface of the outer ring member.

In a rolling bearing assembly for a wheel in accordance with a first aspect which is based on the aforementioned aspect, a maximum outer diameter D of the cageis a bore diameter F of an outer ring shoulder portion, the outer ring shoulder portion that is formed on an outboard side of the outer ring member with respect to the outer ring raceway surface and that projects radially inward, a relation D ≤ F may be satisfied, and the cage may be inserted through the outer ring shoulder portion into the outer ring member from the outboard side of the vehicle, with the plurality of rolling elements arranged at regular intervals on the outer ring raceway surface, so that the rolling element is fitted into each pocket of a plurality of pockets of the cage.

According to the aforementioned first aspect, the maximum outer diameter D of the cage is configured to be the same as or smaller than the bore diameter F of the outer ring shoulder portion, which is formed on an outboard side of the outer ring member with respect to the outer ring raceway surface and that projects radially inward. Thus; the cage can be inserted through the outer ring shoulder portion into the outer ring member from the outboard side of the vehicle, with the plurality of rolling elements arranged at regular intervals using a jig or the like on the outer ring raceway surface of the outer ring member, so that the rolling element can be fitted into each pocket of the plurality of pockets of the cage, for assembly. Since the plurality of rolling elements and the cage can be assembled onto the outer ring raceway surface of the outer ring member in this way, the circumscribed circle diameter C of the rolling elements can be set to be larger than the bore diameter B of the fitting tubular portion of the outer ring member.

In a rolling bearing assembly for a wheel in accordance with a second aspect which is based on the aforementioned aspect, a maximum outer diameter D of the cage is smaller than or equal to the bore diameter B of the fitting tubular portion, and the cage may be inserted into the outer ring member from the inboard side of the vehicle, with the plurality of rolling elements arranged on the outer ring raceway surface of the outer ring member, so that the rolling element is fitted into each pocket of a plurality of pockets of the cage.

According to the aforementioned second aspect, the maximum outer diameter D of the cage is configured to be the same as or smaller than the bore diameter B of the fitting tubular portion of the outer ring member. Thus, the cage can be inserted from the inboard side of the vehicle, with the plurality of rolling elements arranged at regular intervals using a jig or the like on the outer ring raceway surface of the outer ring member, so that the rolling element can be fitted into each pocket of the plurality of pockets of the cage, for assembly. Since the plurality of rolling elements and the cage can be assembled onto the outer ring raceway surface of the outer ring member in this way, the circumscribed circle diameter C of the rolling elements can be set to be larger than the bore diameter B of the fitting tubular portion of the outer ring member.

In a rolling bearing assembly for a wheel in accordance with a third aspect which is based on the aforementioned aspect, the cage may be formed with a split portion by which the cage is elastically deformed to reduce its diameter, and the cage and the plurality of rolling elements may be inserted through the fitting tubular portion of the outer ring member, with rolling element fitted into each pocket of a plurality of pockets of the cage, and when the cage is deformed by the split portion to reduce its diameter, and the initial shape of the cage may be then restored so that the plurality of rolling elements are arranged on the outer ring raceway surface of the outer ring member.

According to the aforementioned third aspect, the cage can be inserted through the fitting tubular portion of the outer ring member, with rolling element fitted into each pocket of the plurality of pockets of the cage, by deforming the cage spirally to reduce its diameter. Then, the plurality of rolling elements and the cage can be assembled onto the outer ring raceway surface of the outer ring member by restoring the cage to its initial shape while arranging the plurality of rolling elements on the outer ring raceway surface of the outer ring member. Thus, the circumscribed circle diameter C of the rolling elements can be set to be larger than the bore diameter B of the fitting tubular portion of the outer ring member.

In a rolling bearing assembly for a wheel in accordance with a fourth aspect which is based on the aforementioned aspect, the cage may be formed by a plurality of split cages that are split in a circumferential direction, and the split cages may be sequentially inserted through the fitting tubular portion of the outer ring member, with rolling element fitted into each pocket of the split cages, so that the plurality of rolling elements are arranged on the outer ring raceway surface of the outer ring member.

According to the aforementioned fourth aspect, the rolling elements can be fitted into each pocket of the split cages, that are split into a plurality of pieces in the circumferential direction, and then the plurality of split cages can be sequentially inserted through the fitting tubular portion of the outer ring member so that the plurality of rolling elements and the plurality of split cages can be assembled onto the outer ring raceway surface of the outer ring member. Since the plurality of rolling elements and the plurality of split cages can be assembled onto the outer ring raceway surface of the outer ring member in this way, the circumscribed circle diameter C of the rolling elements can be set to be larger than the bore diameter B of the fitting tubular portion of the outer ring member.

In the rolling bearing assembly for a wheel in accordance with the aforementioned aspect, the outer ring raceway surface may be formed as a recess with a semicircular cross section in the inner peripheral surface of the outer ring member.

A method of manufacturing a wheel rolling bearing assembly in accordance with an aspect of the present invention includes: preparing an inner ring member that is attached to a wheel and having an inner ring raceway surface on an outer peripheral surface; preparing an outer ring member having a fitting tubular portion at an inboard end portion of the outer ring member, the fitting tubular portion being fitted into an attachment hole of a vehicle body member, the outer ring member also having an outer ring raceway surface on an inner peripheral surface, and outer ring raceway surface being formed by such a recess that a bore diameter B of the fitting tubular portion of the outer ring member is smaller than a circumscribed circle diameter C of a rolling elements; preparing a plurality of rolling elements disposed between both the inner and outer ring raceway surfaces so as to be rollable; preparing a cage that holds the plurality of rolling elements; assembling the plurality of rolling elements and the cage onto the outer ring raceway surface; inserting the inner ring member into the outer ring member, to which the plurality of rolling elements and the cage have been assembled; and calking an inboard end of the inserted inner ring member to fix the outer ring member and the inner ring member.

In the method of manufacturing a wheel rolling bearing assembly in accordance with a first aspect which is based on the aforementioned aspect, the outer ring member may have an outer ring shoulder portion that is formed on an outboard side of the outer ring member with respect to the outer ring raceway surface and that projects radially inward, and a maximum outer diameter D of the cage is less than or equal to a bore diameter F of the outer ring shoulder portion, and the method may further include: holding the plurality of rolling elements at regular intervals on the outer ring raceway surface; inserting the cage through the outer ring shoulder portion into the outer ring member from the outboard side of the vehicle; and fitting rolling element into each pocket of a plurality of pockets of the cage.

In the method of manufacturing a wheel rolling bearing assembly in accordance with a second aspect which is based on the aforementioned aspect, the fitting tubular portion of the outer ring member may be formed such that a maximum outer diameter D of the cage is less than or equal to the bore diameter B of the fitting tubular portion, and the method may further include: holding the plurality of rolling elements such that the plurality of rolling elements is arranged on the outer ring raceway surface of the outer ring member; inserting the cage into the outer ring member from the inboard side of the vehicle; and fitting rolling element into each pocket of a plurality of pockets of the cage.

In the method of manufacturing a wheel rolling bearing assembly in accordance with a third aspect which is based on the aforementioned aspect, the cage may be formed with a split portion by which the cage is elastically deformed to reduce its diameter, and the method may further include: fitting rolling element into each pocket of a plurality of pockets of the cage; inserting the cage and the plurality of rolling elements through the fitting tubular portion; and restoring the cage to its initial shape after insertion through the fitting tubular portion so that the plurality of rolling elements are arranged on the outer ring raceway surface of the outer ring member.

In the method of manufacturing a wheel rolling bearing assembly in accordance with a fourth aspect which is based on the aforementioned aspect, the cage may include a plurality of split cages that are split in a circumferential direction, and the method may further include: fitting rolling element into each pocket of a plurality of pockets of the split cages; and sequentially inserting the split cages through the fitting tubular portion, with the plurality of rolling elements fitted in the split cages, so that the plurality of rolling elements are arranged on the outer ring raceway surface of the outer ring member.

### BRIEF DESCRIPTION OF THE DRAWINGS

The features, advantages, and technical and industrial significance of this invention will be described in the following detailed description of example embodiments of the invention with reference to the accompanying drawings, in which like numerals denote like elements, and wherein:
FIG. 1 is a vertical cross sectional view showing a rolling bearing assembly for a wheel in accordance with a first embodiment of the present invention;
FIG 2 is a vertical cross sectional view of the first embodiment showing an inner ring member, an outer ring member, rolling elements and cages in the assembly state as enlarged;
FIG. 3 is an illustration of the first embodiment showing the state after rolling elements are disposed on an outer ring raceway surface positioned on the inboard side of the outer ring member and before assembling a cage;
FIG. 4 is an illustration of the first embodiment showing the state after rolling elements and a cage are disposed on the outer ring raceway surface on the inboard side of the outer ring member positioned and subsequently rolling elements and a cage are disposed on an outer ring raceway surface positioned on the outboard side of the outer ring member;
FIG 5 is an illustration of the first embodiment showing the state in which the inner ring member and the outer ring member are fitted and before an inner ring element is press-fitted onto a hub spindle of the inner ring member;
FIG. 6 is an illustration of the first embodiment showing the state in which a tubular portion provided at the tip of the hub spindle of the inner ring member is calked;
FIG. 7 is a vertical cross sectional view of a second embodiment showing an inner ring member, an outer ring member, rolling elements and cages in the assembly state as enlarged;
FIG. 8 is an illustration of the second embodiment showing the state after rolling elements are arranged on an outer ring raceway surface positioned on the inboard side of the outer ring member and before assembling a cage;
FIG 9 is an illustration of the second embodiment showing the state in which the inner ring member and the outer ring member are fitted and before an inner ring element is press-fitted onto a hub spindle of the inner ring member;
FIG. 10 is an illustration of the second embodiment showing the state in which a tubular portion provided at the tip of the hub spindle of the inner ring member is calked;
FIG. 11 is a front view showing a cage for use in a third embodiment;
FIG. 12 is a perspective view of the third embodiment showing the state in which the cage is deformed spirally so as to reduce its diameter;
FIG 13 is an illustration of the third embodiment showing the state in which the cage which has been deformed spirally so as to reduce its diameter is assembled onto an outer ring raceway surface positioned on the inboard side of the outer ring member;
FIG. 14 is a front view showing a plurality of split cages constructing a cage of a rolling bearing assembly for a vehicle in accordance with a fourth embodiment;
FIG. 15 is a perspective view of the fourth embodiment showing the plurality of split cages;
FIG. 16 is an illustration of the fourth embodiment showing the state in which the plurality of split cages are assembled onto an outer ring raceway surface on the inboard side of the outer ring member positioned;
FIG 17 is a vertical cross sectional view showing a rolling bearing assembly for a wheel in accordance with a related art; and
FIG. 18 is an illustration of the related art showing the state before rolling elements and a cage are disposed on an outer ring raceway surface positioned on the inboard side of the outer ring member.

### DETAILED DESCRIPTION OF EMBODIMENTS

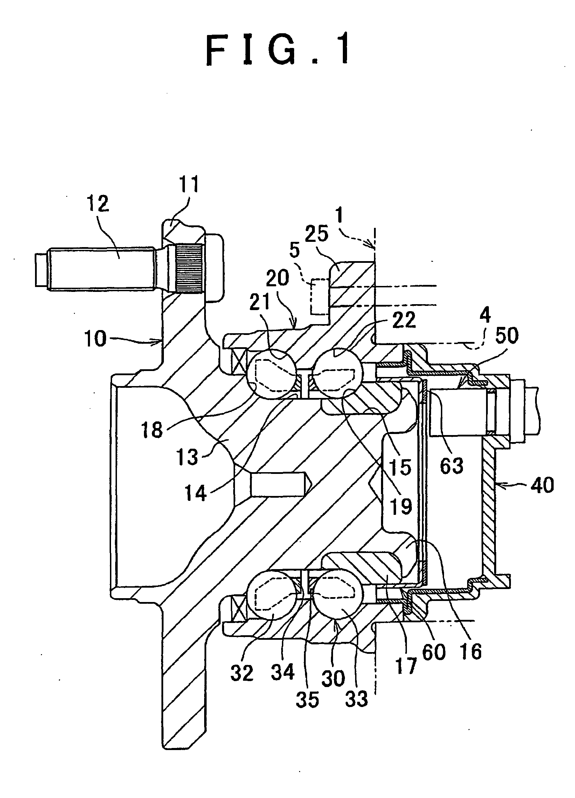

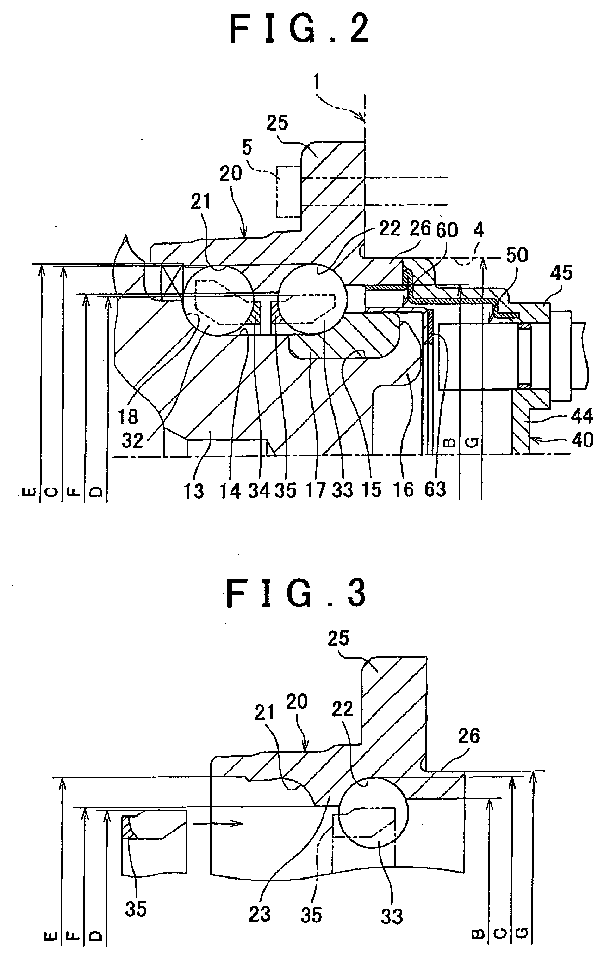

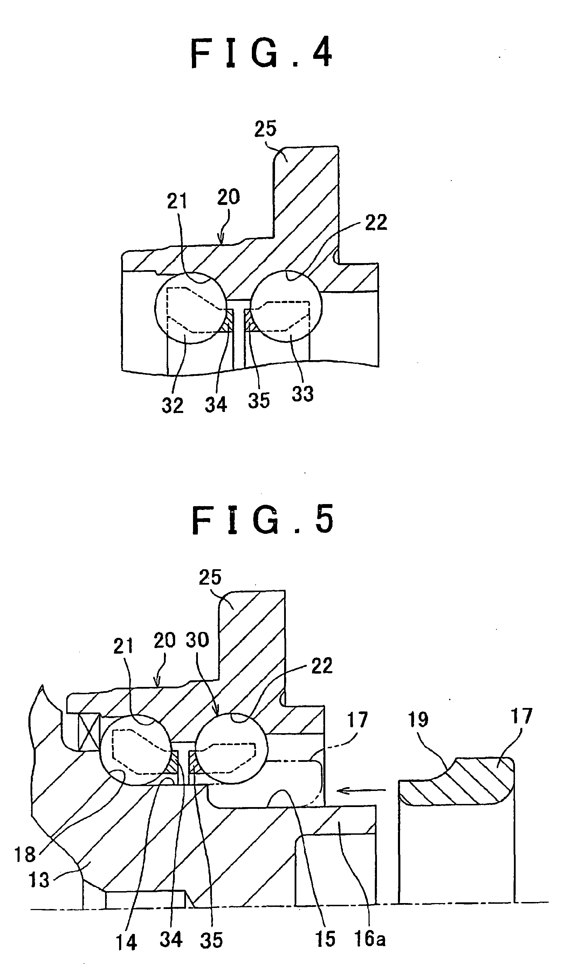

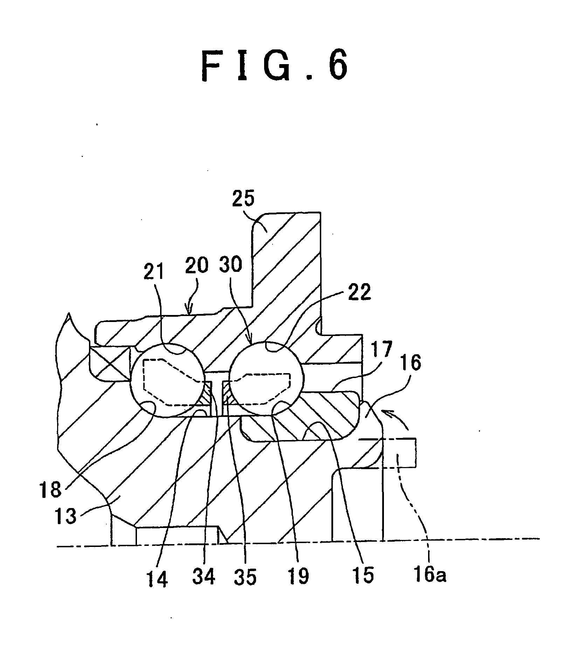

A first embodiment of the present invention will be described with reference to FIGs. 1 to 6. FIG. 1 is a vertical cross sectional view showing a rolling bearing assembly for a wheel in accordance with a first embodiment of the present invention. FIG. 2 is a vertical cross sectional view of the first embodiment showing an inner ring member, an outer ring member, rolling elements and cages in the assembly state as enlarged. FIG. 3 is an illustration of the first embodiment showing the state after rolling elements are disposed on an outer ring raceway surface positioned on the inboard side of the outer ring member and before assembling a cage. FIG. 4 is an illustration of the first embodiment showing the state after rolling elements and a cage are disposed on the outer ring raceway surface positioned on the inboard side of the outer ring member and subsequently rolling elements and a cage are disposed on an outer ring raceway surface positioned on the outboard side of the outer ring member. FIG. 5 is an illustration of the first embodiment showing the state in which the inner ring member and the outer ring member are fitted and before an inner ring element is press-fitted onto a hub spindle of the inner ring member. FIG. 6 is an illustration of the first embodiment showing the state in which a tubular portion provided at the tip of the hub spindle of the inner ring member is calked. In FIGs. 1 to 6, the left side corresponds to the outer side in the vehicle width direction, and the right side corresponds to the inner side in the vehicle width direction. Thus, in the description below, the direction corresponding to the left side of FIGs. 1 to 6 is referred to as "outboard side", and the direction corresponding to the right side of FIGs. 1 to 6 is referred to as "inboard side".

As shown in FIG. 1, a rolling bearing assembly for a wheel (a hub unit for a wheel) includes, as unitized, an inner ring member (wheel hub) 10 attached to a wheel, an outer ring member 20 fixed to a vehicle body, a plurality of lines of rolling elements (balls) 32, 33, cages 34, 35, a cover member 40, a rotation detector 50, and a tubular member 60 having a pulser ring 63.

As shown in FIGs. 1 and 2, the inner ring member 10 integrally includes a hub spindle 13 and a flange 11 formed on the outer peripheral surface of the hub spindle 13 close to an end on the outboard side of the inner ring member 10. A plurality of hub bolts 12 are press-fitted into the flange 11 on a circle, spaced at predetermined pitches or by predetermined angles from each other, to attach a wheel (driven wheel) with a brake rotor interposed therebetween. The inner ring member 10 also integrally includes a large-diameter shaft portion 14 formed at a portion of the hub spindle 13 on the inboard side of the hub spindle 13 with respect to the flange 11, and a small-diameter shaft portion 15, with a diameter suitably smaller than the diameter of the large-diameter shaft portion 14, positioned on the inboard side from the large-diameter shaft portion 14 with respect to the large-diameter shaft portion 14 and formed continuously next to the large-diameter shaft portion 14 with a stepped portion interposed therebetween. An inner ring raceway surface 18, positioned on the outboard side of the hub spindle 13, is formed on the outer peripheral surface of the large-diameter shaft portion 14. An inner ring element 17 is press-fitted onto the outer peripheral surface of the small-diameter shaft portion 15 of the hub spindle 13. An inner ring raceway surface 19, positioned on the inboard side, is formed on the outer peripheral surface of the inner ring element 17. A tubular portion 16a, which is an end of the small-diameter shaft portion 15 on the inboard side of the hub spindle 13, is calked to form a calked portion 16 so that the inner ring element 17 is fixed between the stepped portion and the calked portion 16 (see FIG 6).

As shown in FIG. 1, the outer ring member 20 is formed in a tubular shape and disposed coaxially around the outer periphery of the hub spindle 13. Both outer ring raceway surfaces 21, 22 are formed to be dented on the inner peripheral surface of the outer ring member 20 so as to face both the inner ring raceway surfaces 18, 19, respectively, of the inner ring member 10. A plurality of rolling elements 32, 33 and synthetic-resin crown-like (single-sided) cages 34, 35 that hold the plurality of rolling elements 32, 33, respectively, are assembled between the inner and outer ring raceway surfaces 18, 19, 21, 22, respectively, to construct a plurality of lines of roller bearings (angular ball bearings) 30. The outer ring raceway surface 22, positioned on the inboard side of the outer ring member 20, is formed by forming a recess that is semicircular in cross section continuously along the inner peripheral surface of the outer ring member 20. An outer ring shoulder portion 23 is formed adjacently on the outboard side with respect to the outer ring raceway surface 22 that is positioned on the inboard side of the outer ring member 20. The outer ring shoulder portion 23 projects radially inward from the inner peripheral surface of the outer ring member 20 and forms a part of the outer ring raceway surface 22. The outer ring raceway surface 21, positioned on the outboard side of the outer ring member 20, is positioned adjacently on the outboard side with respect to the outer ring shoulder portion 23, and formed by forming a recess that is arc in cross section on a surface on the outboard side with respect to the outer ring shoulder portion 23. The cages 34, 35 in the first embodiment are in a continuous annular shape with no break as viewed in the axial direction of the rolling bearing assembly for a wheel.

As shown in FIG. 2, an attachment flange 25 is formed on the outer peripheral surface of the outer ring member 20 close to an end on the inboard side of the outer ring member 20. A fitting tubular portion 26 which projects to be fitted into an attachment hole 4 of a vehicle body member (knuckle, carrier, etc.) 1 is formed at an inboard end of the outer ring member 20 (at a portion of the outer ring member 20 on the inboard side with respect to the attachment flange 25). A cover member 40 in a lidded tubular shape is press-fitted into the inner peripheral surface of the fitting tubular portion 26 of the outer ring member 20 to protect the inside of the roller bearing 30 from muddy water and dust. A boss 45 is formed integrally in a lid 44 of the cover member 40 as a hole conforming to the outer peripheral shape of the rotation detector 50. The rotation detector 50 is fitted into the boss 45 for attachment. Meanwhile, the tubular member 60 having the pulser ring 63 at a position facing a detection portion of the rotation detector 50 is press-fitted onto the outer peripheral surface of the inner ring element 17 for attachment. The rolling bearing assembly for a wheel is thus unitized. The rolling bearing assembly for a wheel can be attached to the vehicle body member 1 by fitting the fitting tubular portion 26 of the outer ring member 20 into the attachment hole 4 of the vehicle body member 1 and fastening the attachment flange 25 to the vehicle body member 1 with a bolt 5.

In order to increase the rigidity (improve the bearing performance) of the rolling bearing assembly for a wheel, the circumscribed circle diameter C of the rolling elements 33 (32) (the maximum diameter of the outer ring raceway surface) is set to be larger than the bore diameter B of the fitting tubular portion 26 of the outer ring member 20. In order to allow the rolling elements 33 and the cage 35 to be disposed on the outer ring raceway surface 22 positioned on the inboard side of the outer ring member 20, the maximum outer diameter D of the cage 35 for use on the outer ring raceway surface 22 positioned on the inboard side is set to be the same as or slightly smaller than the bore diameter F of the outer ring shoulder portion 23 which is formed at a portion of the outer ring member 20 positioned on the outboard side with respect to the outer ring raceway surface 22 and formed to project radially inwardly between both the outer ring raceway surfaces 21, 22. That is, the relations "B < C" and "D ≤ F" are satisfied. The bore diameter E at an tip end on the outboard side of the outer ring member 20, which is on the opposite side of the fitting tubular portion 26 in the vehicle width direction, is set to be larger than the circumscribed circle diameter C of the rolling elements 32 (33). The outer diameter G of the fitting tubular portion 26 of the outer ring member 20 is forme to be approximately the same as the bore diameter of the attachment hole 4 of the vehicle body member 1.

The rolling bearing assembly for a wheel in accordance with the first embodiment is configured as discussed above. Thus, in assembling the plurality of lines of rolling elements 32, 33 and the cages 34, 35 between the inner ring member 10 and the outer ring member 20 to construct a unitized rolling bearing assembly for a wheel, first, the rolling elements 33 and the cage 35 are assembled onto the outer ring raceway surface 22 positioned on the inboard side of the outer ring member 20. At this time, as shown in FIG. 3, the plurality of rolling elements 33 are held at regular intervals using a jig or the like on the outer ring raceway surface 22 positioned on the inboard side of the outer ring member 20, and in this state the cage 35 is inserted from an opening of an inner hole provided at an outboard end on the outboard side of the outer ring member 20, which is on the opposite side of the fitting tubular portion 26 in the vehicle width direction. That is to say, the cage 35 is inserted into the opening of the inner hole of the outer ring member 20 from the outboard side of the vehicle. Then, after the cage 35 passes through the outer ring shoulder portion 23, the plurality of rolling elements 33 are fitted into respective pockets of the cage 35.

Then, as shown in FIG. 4, the rolling elements 32 and the cage 34 are assembled onto the outer ring raceway surface 21 positioned on the outboard side of the outer ring member 20. At this time, since the bore diameter E at an end on the outboard side of the outer ring member 20, is set to be larger than the circumscribed circle diameter C of the rolling elements 32 (33), an assembly in which the rolling elements 32 have been fitted in respective pockets of the cage 34 is inserted from an outboard opening of the outer ring member 20 to be assembled onto the outer ring raceway surface 21 positioned on the outboard side of the outer ring member 20.

Then, as shown in FIG. 5, the hub spindle 13 of the inner ring member 10 is fittingly inserted into the outer ring member 20. Here, the inner ring element 17 is press-fitted onto the small-diameter shaft portion 15 of the hub spindle 13. Then, as shown in FIG. 6, the tubular portion 16a at the tip of the small-diameter shaft portion 15 is calked using a calking jig to form the calked portion 16, allowing the outer ring member 20 and the inner ring member 10 to be integrated with the plurality of lines of roller bearings 30 interposed therebetween. Then, as shown in the drawing, the tubular member 60 having the pulser ring 63 is press-fitted onto the outer peripheral surface of the inner ring element 17 of the hub spindle 13 for fixation, and finally the cover member 40 having the rotation detector 50 is press-fitted into the inner peripheral surface of the fitting tubular portion 26 of the outer ring member 20 for fixation. A unitized rolling bearing assembly for a wheel is thus constructed.

As described above, the maximum outer diameter D of the cage 35 for use on the outer ring raceway surface 22 positioned on the inboard side of the outer ring memmber 20 is configured to be the same as or smaller than the bore diameter F of the outer ring shoulder portion 23. Thus, the cage 35 can be inserted through the opening of the inner hole of the outer ring member 20 on the opposite side of the fitting tubular portion 26 in the vehicle width direction, with the plurality of rolling elements 33 arranged at regular intervals using a jig or the like on the outer ring raceway surface 22 of the outer ring member 20 positioned on the inboard side, so that the plurality of rolling elements 33 can be fitted into the plurality of pockets of the cage 35 for assembly. Since the plurality of rolling elements 33 and the cage 35 can be assembled onto the outer ring raceway surface 22 positioned on the inboard side of the outer ring member 20 in this way, the circumscribed circle diameter C of the rolling elements 33 (32) can be set to be larger than the bore diameter B of the fitting tubular portion 26 of the outer ring member 20. Then, the number of the rolling elements 33 (32) used can be increased or the diameter of the rolling elements 33 (32) can be increased for the increase in the circumscribed circle diameter C of the rolling elements 33 (32). This increases the rigidity and improves the durability of the rolling bearing assembly for a wheel. In addition, the configuration also provides a weight reduction effect, because the weight of the outer ring member 20 can be reduced for the circumscribed circle diameter C of the rolling elements 33 (32), in other words, the maximum diameter of the outer ring raceway surface 22 (21) of the outer ring member 20, which is increased compared to the bore diameter B of the fitting tubular portion 26.

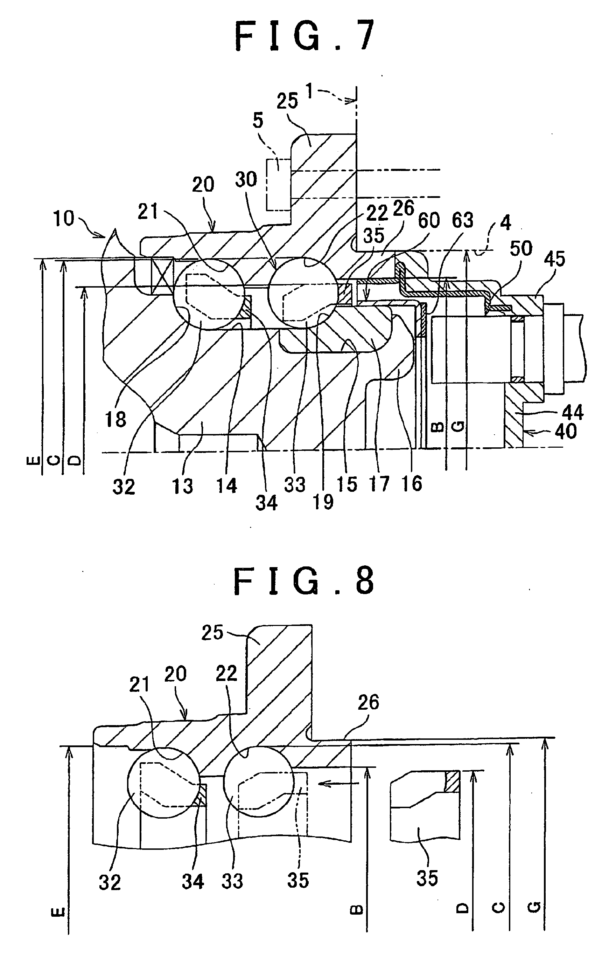

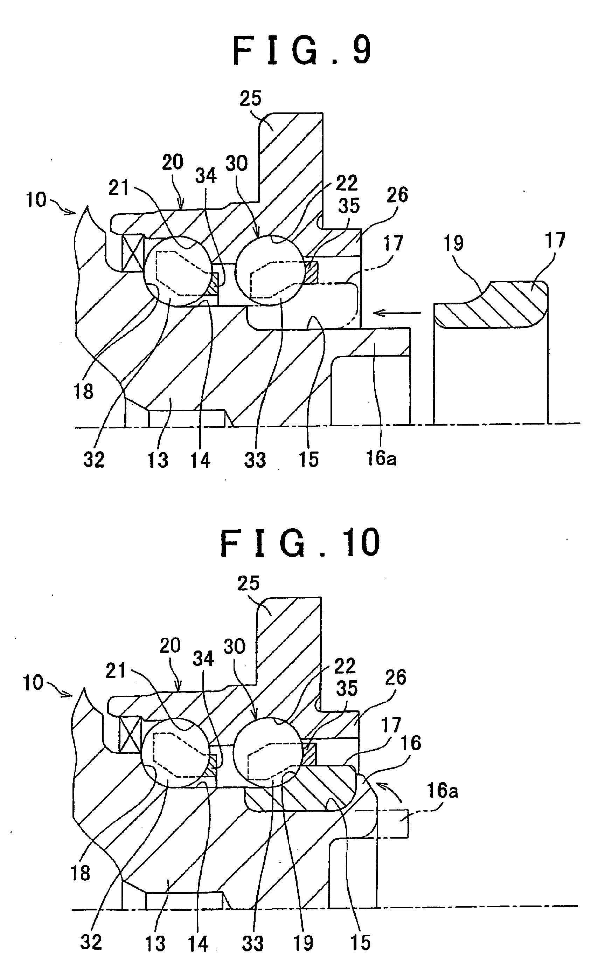

A second embodiment of the present invention will be described with reference to FIGs. 7 to 10. FIG. 7 is a vertical cross sectional view of the second embodiment showing an inner ring member, an outer ring member, rolling elements and cages in the assembly state as enlarged. FIG. 8 is an illustration of the second embodiment showing the state after rolling elements are disposed on an outer ring raceway surface positioned on the inboard side of the outer ring member and before assembling a cage. FIG. 9 is an illustration of the second embodiment showing the state in which the inner ring member and the outer ring member are fitted and before an inner ring element is press-fitted onto a hub spindle of the inner ring member. FIG. 10 is an illustration of the second embodiment showing the state in which a tubular portion provided at the tip of the hub spindle of the inner ring member is calked. In the second embodiment, the same components as those of the first embodiment are denoted by the same reference numerals as those of the first embodiment to omit their descriptions.

In the second embodiment, as shown in FIGs. 7 and 8, in order to increase the rigidity (improve the bearing performance) of the rolling bearing assembly for a wheel, the circumscribed circle diameter C of the rolling elements 33 (32) (the maximum diameter of the outer ring raceway surface) is set to be larger than the bore diameter B of the fitting tubular portion 26 of the outer ring member 20. In order to allow the rolling elements 33 and the cage 35 to be disposed on the outer ring raceway surface 22 positioned on the inboard side of the outer ring member 20, the maximum outer diameter D of the cage 35 for use on the outer ring raceway surface 22 positioned on the inboard side is set to be the same as or slightly smaller than the bore diameter B of the fitting tubular portion 26 of the outer ring member 20. That is, the relation "D ≤ B < C" is satisfied. The bore diameter E at an outboard end of the outer ring member 20, which is on the opposite side of the fitting tubular portion 26 in the axial direction, is set to be the same as or larger than the circumscribed circle diameter C of the rolling elements 32 (33). The outer diameter G of the fitting tubular portion 26 of the outer ring member 20 corresponds to the attachment hole 4 of the vehicle body member 1 (i.e. is set to be approximately the same as the bore diameter of the attachment hole 4).

The rolling bearing assembly for a wheel in accordance with the second embodiment is configured as discussed above. Thus, in assembling the plurality of lines of rolling elements 32, 33 and the cages 34, 35 between the inner ring member 10 and the outer ring member 20 to construct a unitized rolling bearing assembly for a wheel, first, the rolling elements 32, 33 and the cages 34, 35 are assembled onto both the outer ring raceway surfaces 21, 22, respectively, of the outer ring member 20. Since the bore diameter E of an outboard portion of the outer ring member 20 is set to be the same as or larger than the circumscribed circle diameter C of the rolling elements 32 (33), as shown in FIG 8, an assembly in which the rolling elements 32 have been fitted in the respective pockets of the cage 34 for use on the outboard side is inserted from an opening on the outboard side of the outer ring member 20 to be assembled onto the outer ring raceway surface 21 positioned on the outboard side of the outer ring member 20. Meanwhile, the plurality of rolling elements 33 are held at regular intervals using a jig or the like on the outer ring raceway surface 22 positioned on the inboard side of the outer ring member 20, and in this state the cage 35 to be positioned on the inboard side is inserted through an inner hole of the fitting tubular portion 26 of the outer ring member 20 from the inboard side of the vehicle, so that the plurality of rolling elements 33 are fitted into the respective pockets of the cage 35 for assembly.

Then, as shown in FIG. 9, the hub spindle 13 of the inner ring member 10 is fittingly inserted into the outer ring member 20. Here, the inner ring element 17 is press-fitted onto the small-diameter shaft portion 15 of the hub spindle 13. Then, as shown in FIG 10, the tubular portion 16a provided at the tip of the small-diameter shaft portion 15 is calked using a calking jig to form the calked portion 16, allowing the outer ring member 20 and the inner ring member 10 to be integrated with the plurality of lines of roller bearings 30 interposed therebetween. Then, as in the first embodiment shown in FIG. 1, the tubular member 60 having the pulser ring 63 is press-fitted onto the outer peripheral surface of the inner ring element 17 of the hub spindle 13 for fixation, and finally the cover member 40 having the rotation detector 50 is press-fitted into the inner peripheral surface of the fitting tubular portion 26 of the outer ring member 20 for fixation. A unitized rolling bearing assembly for a wheel is thus constructed.

As described above, the maximum outer diameter D of the cage 35 for use on the outer ring raceway surface 22 is configured to be the same as or smaller than the bore diameter B of the fitting tubular portion 26 of the outer ring member 20. Thus, the cage 35 can be inserted into the fitting tubular portion 26 of the outer ring member 20 from the inboard side of the vehicle, with the plurality of rolling elements 33 arranged at regular intervals using a jig or the like on the outer ring raceway surface 22 positioned on the inboard side of the outer ring member 20, so that the plurality of rolling elements 33 can be fitted into the plurality of pockets of the cage 35 for assembly. Since the plurality of rolling elements 33 and the cage 35 can be assembled onto the outer ring raceway surface 22 positioned on the inboard side of the outer ring member 20 in this way, the circumscribed circle diameter C of the rolling elements 33 (32) can be set to be larger than the bore diameter B of the fitting tubular portion 26 of the outer ring member 20. Then, the number of the rolling elements 33 (32) used can be increased or the diameter of the rolling elements 33 (32) can be increased for the increase in the circumscribed circle diameter C of the rolling elements 33 (32). This increases the rigidity and improves the durability of the rolling bearing assembly for a wheel. In addition, the configuration also provides a weight reduction effect, because the weight of the outer ring member 20 can be reduced for the increase in the circumscribed circle diameter C of the rolling elements 33 (32) (the maximum diameter of the outer ring raceway surface 22 (21)).

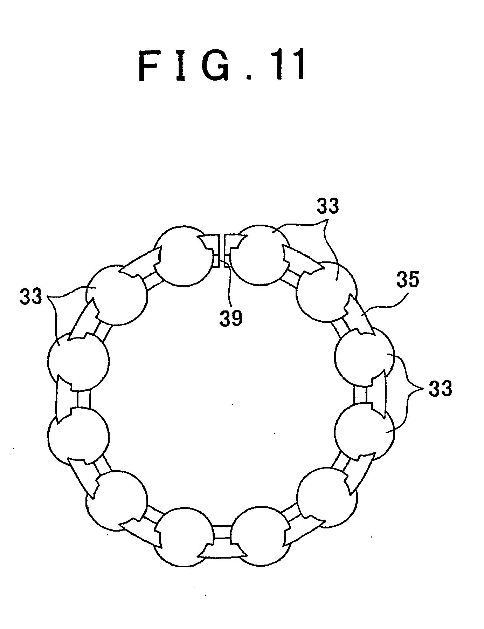

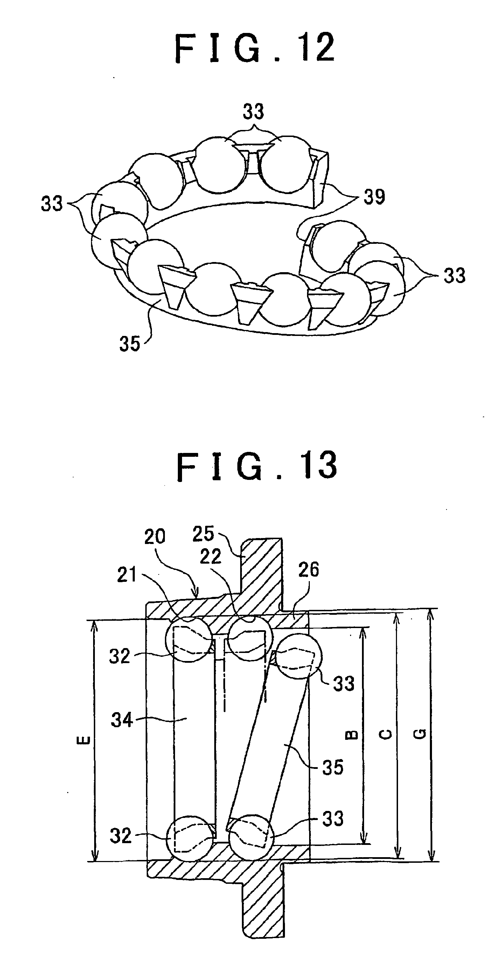

A third embodiment of the present invention will be described with reference to FIGs. 11 to 13. FIG. 11 is a front view showing a cage for use in a third embodiment. FIG. 12 is a perspective view of the third embodiment showing the state in which the cage is deformed spirally so as to reduce its diameter. FIG. 13 is an illustration of the third embodiment showing the state in which the cage which has been deformed spirally so as to reduce its diameter is assembled onto an outer ring raceway surface positioned on the inboard side of the outer ring member. In the third embodiment, the same components as those of the first and second embodiments are denoted by the same reference numerals to omit their descriptions.

In the third embodiment, as in the second embodiment, in order to increase the rigidity (improve the bearing performance) of the rolling bearing assembly for a wheel, the circumscribed circle diameter C of the rolling elements 33 (32) (the maximum diameter of the outer ring raceway surface) is set to be larger than the bore diameter B of the fitting tubular portion 26 of the outer ring member 20, as shown in FIG. 13. That is, the relation "B < C" is satisfied. In order to allow the rolling elements 33 and the cage 35 to be disposed on the outer ring raceway surface positioned on the inboard side 22 of the outer ring member 20, a split portion 39 is formed in the cage 35 for use on the outer ring raceway surface 22, as shown in FIGs. 11 and 12. The annular cage 35 is split at the split portion 39, by which the cage 35 can be deformed elastically and spirally so as to reduce its diameter. That is, the cage 35 can be inserted into the inner hole of the fitting tubular portion 26 while being deformed spirally so as to reduce its diameter, with the rolling elements 33 fitted and held in the respective pockets of the cage 35 for use on the outer ring raceway surface 22. The bore diameter E at an end on the outboard side of the outer ring member 20, which is on the opposite side of the fitting tubular portion 26 in the axial direction, is set to be larger than the circumscribed circle diameter C of the rolling elements 32 (33). The outer diameter G of the fitting tubular portion 26 of the outer ring member 20 is formed to be approximately the same as the bore diameter of the attachment hole 4 of the vehicle body member 1. The cage 34 is in a continuous annular shape with no split portion 39 as viewed in the axial direction of the rolling bearing assembly for a wheel.

The rolling bearing assembly for a wheel in accordance with the third embodiment is configured as discussed above. Thus, in assembling the plurality of lines of rolling elements 32, 33 and the cages 34, 35 between the inner ring member 10 and the outer ring member 20 to construct a unitized rolling bearing assembly for a wheel, first, the rolling elements 32 and the cage 34 are assembled, and the rolling elements 33 and the cage 35 are assembled, allowing the rolling elements 32, 33 to be held by the cages 34, 35, respectively. Then, the cages 34, 35 holding the rolling elements 32, 33, respectively, are assembled onto the outer ring raceway surfaces 21, 22, respectively, of the outer ring member 20. Specifically, as shown in FIG. 13, the cage 35 for use on the outer ring raceway surface 22 is inserted through the inner hole of the fitting tubular portion 26 with the rolling elements 33 fitted and held in the respective pockets of the cage 35 and with the cage 35 deformed spirally so as to reduce its diameter (to a diameter smaller than the bore diameter B of the fitting tubular portion 26). Then, the cage 35 is restored to its initial shape, allowing the rolling elements 33 and the cage 35 to be arranged on the outer ring raceway surface 22 positioned on the inboard side. Meanwhile, since the bore diameter E of an outboard portion of the outer ring member 20 is set to be the same as or larger than the circumscribed circle diameter C of the rolling elements 32 (33), an assembly in which the rolling elements 32 have been fitted in the respective pockets of the cage 34 for use on the outboard side is inserted from the opening on the outboard side of the outer ring member 20 to be assembled onto the outer ring raceway surface 21 positioned on the outboard side of the outer ring member 20. with the rolling elements 32, 33 and the cages 34, 35 assembled to the outer ring member 20 in this way, the third embodiment assumes the same state as shown in FIG. 4 showing the first embodiment.

Then, in the same manner as in FIG 5 showing the first embodiment, the hub spindle 13 of the inner ring member 10 is fittingly inserted into the outer ring member 20. Here, the inner ring element 17 is press-fitted onto the small-diameter shaft portion 15 of the hub spindle 13. Then, in the same manner as in FIG. 6 showing the first embodiment, the tubular portion 16a provided at the tip of the small-diameter shaft portion 15 is calked using a calking jig to form the calked portion 16, allowing the outer ring member 20 and the inner ring member 10 to be integrated with the plurality of lines of roller bearings 30 interposed therebetween. Then, in the same manner as in FIG. 1 showing the first embodiment, the tubular member 60 having the pulser ring 63 is press-fitted onto the outer peripheral surface of the inner ring element 17 of the hub spindle 13 for fixation, and finally the cover member 40 having the rotation detector 50 is press-fitted into the inner peripheral surface of the fitting tubular portion 26 of the outer ring member 20 for fixation. A unitized rolling bearing assembly for a wheel is thus constructed.

As described above, the cage 35 for use on the outer ring raceway surface 22 positioned on the inboard side is formed to be deformable elastically and spirally so as to reduce its diameter. Thus, an assembly in which the rolling elements 33 have been fitted and held in the respective pockets of the cage 35 can be inserted through the inner hole of the fitting tubular portion 26 of the outer ring member 20, allowing the plurality of rolling elements 33 and the cage 35 to be assembled onto the outer ring raceway surface 22 positioned on the inboard side of the outer ring member 20. Thus, the circumscribed circle diameter C of the rolling elements 33 (32) (the maximum diameter of the outer ring raceway surfaces 21, 22) can be set to be larger than the bore diameter B of the fitting tubular portion 26 of the outer ring member 20. Then, the number of the rolling elements 33 (32) used can be increased or the diameter of the rolling elements 33 (32) can be increased for the circumscribed circle diameter C of the rolling elements 33 (32), which is increased compared to the bore diameter B of the fitting tubular portion 26. This increases the rigidity and improves the durability of the rolling bearing assembly for a wheel. In addition, the configuration also provides a weight reduction effect, because the weight of the outer ring member 20 can be reduced for the increase in the circumscribed circle diameter C of the rolling elements 33 (32).

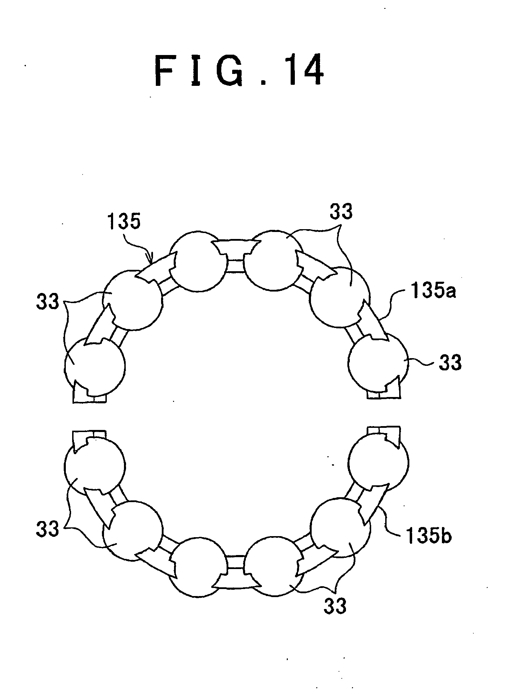

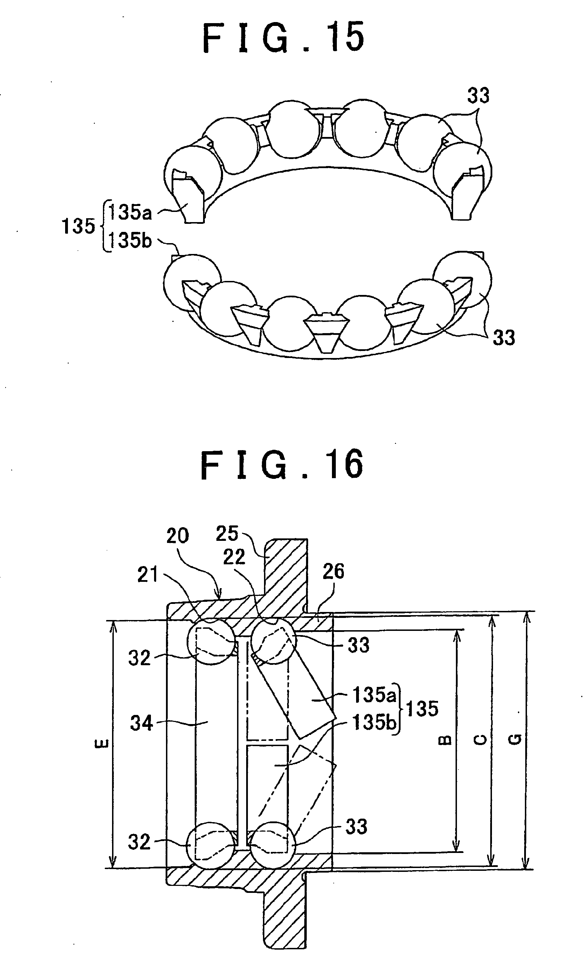

(Fourth Embodiment) A fourth embodiment of the present invention will be described with reference to FIGs. 14 to 16. FIG. 14 is a front view showing a plurality of split cages that constructs a cage of a rolling bearing assembly for a vehicle in accordance with a fourth embodiment of the present invention. FIG. 15 is a perspective view showing the plurality of split cages for use in the fourth embodiment. FIG. 16 is an illustration of the fourth embodiment showing the state in which the plurality of split cages are assembled onto an outer ring raceway surface positioned on the inboard side of the outer ring member.

As shown in FIGs. 14 and 15, in the fourth embodiment, a cage 135 is formed by split cages 135a, 135b that are split into a plurality of (two, in the drawings) pieces in the circumferential direction. Also in the fourth embodiment, as in the third embodiment, in order to increase the rigidity of the rolling bearing assembly for a wheel, the circumscribed circle diameter C of the rolling elements 33 (32) is set to be larger than the bore diameter B of the fitting tubular portion 26 of the outer ring member 20. The configuration of the fourth embodiment is similar to that of the third embodiment in other respects, and thus the same components are denoted by the same reference numerals to omit their descriptions.

Thus, in the fourth embodiment, in assembling the rolling elements 33 and the cage 35 onto the outer ring raceway surface 22 positioned on the inboard side of the outer ring member 20, the rolling elements 33 can be fitted into the respective pockets of both the split cages 135a, 135b, and then as shown in FIG. 16, both the split cages 135a, 135b are sequentially inserted through the inner hole of the fitting tubular portion 26 of the outer ring member 20 so that the plurality of rolling elements 33 and both the split cages 135a, 135b can be assembled onto the outer ring raceway surface 22 positioned on the inboard side of the outer ring member 20. Since the plurality of rolling elements 33 and both the split cages 135a, 135b can be assembled onto the outer ring raceway surface 22 positioned on the inboard side of the outer ring member 20 in this way also in the fourth embodiment, as in the third embodiment, the circumscribed circle diameter C of the rolling elements 33 (the maximum diameter of the outer ring raceway surface) can be set to be larger than the bore diameter B of the fitting tubular portion 26 of the outer ring member 20.

After assembling the plurality of rolling elements 33 and both the split cages 135a, 135b onto the outer ring raceway surface 22 positioned on the inboard side of the outer ring member 20, as in the third embodiment and as shown in FIGs. 5 and 6, the hub spindle 13 of the inner ring member 10 is fittingly inserted into the outer ring member 20, the inner ring element 17 is press-fitted onto the small-diameter shaft portion 15 of the hub spindle 13, and then the tubular portion 16a provided at the tip of the small-diameter shaft portion 15 is calked using a calking jig to form the calked portion 16, allowing the outer ring member 20 and the inner ring member 10 to be integrated with the plurality of lines of roller bearings 30 interposed therebetween. Then, the tubular member 60 having the pulser ring 63 is press-fitted onto the outer peripheral surface of the inner ring element 17 of the hub spindle 13 for fixation, and finally the cover member 40 having the rotation detector 50 is press-fitted into the inner peripheral surface of the fitting tubular portion 26 of the outer ring member 20 for fixation (see FIG. 1).

## Claims

1. A rolling bearing assembly for a wheel, comprising:
an inner ring member (10) that is attached to a wheel, wherein an inner ring raceway surface (18,19) is formed on an outer peripheral surface of the inner ring member;
an outer ring member (20) having a fitting tubular portion (26) at an inboard end portion of the outer ring member, wherein the fitting tubular portion (26) is fitted into an attachment hole (4) of a vehicle body member (1), and wherein an outer ring raceway surface (21, 22) is formed on an inner peripheral surface of the outer ring member;
a plurality of rolling elements (32, 33) disposed between both the inner and outer ring raceway surfaces (18,19, 21, 22); and
a cage (34, 35) that holds the plurality of rolling elements (32, 33), **characterized in that**:
a bore diameter (B) of the fitting tubular portion (26) of the outer ring member (20) is smaller than a circumscribed circle diameter (C) of the rolling elements (32, 33).

2. The rolling bearing assembly for a wheel according to claim 1, wherein
a maximum outer diameter (D) of the cage (35) is less than or equal to a bore diameter (F) of an outer ring shoulder portion (23) that is formed on an outboard side of the outer ring member with respect to the outer ring raceway surface (22), and that projects radially inward, and
the cage (35) is inserted through the outer ring shoulder portion (23) into the outer ring member (20) from the outboard side of the vehicle, with the plurality of rolling elements (33) arranged at regular intervals on the outer ring raceway surface (22), so that the rolling element (33) is fitted into each pocket of a plurality of pockets of the cage (35).

3. The rolling bearing assembly for a wheel according to claim 1, wherein
a maximum outer diameter (D) of the cage (35) is smaller than or equal to the bore diameter (B) of the fitting portion, and
the cage (35) is inserted into the outer ring member (20) from the inboard side of the vehicle, with the plurality of rolling elements (33) arranged on the outer ring raceway surface (22) of the outer ring member (20), so that rolling element (33) is fitted into each pocket of a plurality of pockets of the cage (35).

4. The rolling bearing assembly for a wheel according to claims 1 or 3, wherein
the cage (35) is formed with a split portion (39) by which the cage (35) is elastically deformed to reduce its diameter, and
the cage (35) and the plurality of rolling elements (33) are inserted through the fitting tubular portion (26) of the outer ring member (20), with the rolling element (33) fitted into each pocket of a plurality of pockets of the cage (35), and when the cage (35) is deformed by the split portion (39) to reduce its diameter, and the initial shape of the cage (35) is then restored so that the plurality of rolling elements (33) are arranged on the outer ring raceway surface (22) of the outer ring member (20).

5. The rolling bearing assembly for a wheel according to claims 1 or 3, wherein
the cage (135) is formed by a plurality of split cages (135a, 135b) that are split in a circumferential direction, and
the split cages (135a, 135b) are sequentially inserted through the fitting tubular portion (26) of the outer ring member (20), with the rolling element (33) fitted into each pocket of a pluralty of pockets of the split cages (135a, 135b), so that the plurality of rolling elements (33) are arranged on the outer ring raceway surface (22) of the outer ring member (20).

6. The rolling bearing assembly for a wheel according to any one of claims 1 to 5, wherein
the outer ring raceway surface (22) is formed as a recess with a semicircular cross section in the inner peripheral surface of the outer ring member (20).

7. A method of manufacturing a wheel rolling bearing assembly, comprising:
a step of preparing an inner ring member (10) that is attached to a wheel, wherein an inner ring raceway surface (18, 19) is formed on an outer peripheral surface of the inner ring member (10);
a step of preparing an outer ring member (20) having a fitting tubular portion (26) at an inboard end portion of the outer ring member, wherein the fitting tubular portion (26) is fitted into an attachment hole (4) of a vehicle body member (1), and wherein an outer ring raceway surface (21, 22) is formed on an inner peripheral surface of the outer ring member (20);
a step of preparing a plurality of rolling elements (32, 33) disposed between both the inner and outer ring raceway surfaces (18, 19, 21, 22); and
a step of preparing a cage (34, 35) that holds the plurality of rolling elements (32, 33), **characterized by** further comprising the steps of:
a step of assembling the plurality of rolling elements (33) and the cage (35) onto the outer ring raceway surface (22);
a step of inserting the inner ring member (10) into the outer ring member (20) to which the plurality of rolling elements (33) and the cage (35) have been assembled; and
a step of calking an inboard end of the inserted inner ring member (10) to fix the outer ring member (20) and the inner ring member (10),
wherein the outer ring member (20) haves the outer ring raceway surface (22), wherein the outer ring raceway surface (22) is formed by such a recess that a bore diameter (B) of the fitting tubular portion (26) is smaller than a circumscribed circle diameter (C) of the rolling elements (33).

8. The method according to claim 7, wherein
the outer ring member (20) has an outer ring shoulder portion (23) that is formed on an outboard side of the outer ring member with respect to the outer ring raceway surface (22) and that projects radially inward, wherein a maximum outer diameter (D) of the cage (35) is less than or equal to a bore diameter of the outer ring shoulder portion (23), and
the method further comprising:
a step of holding the plurality of rolling elements (33) at regular intervals on the outer ring raceway surface (22);
a step of inserting the cage (35) through the outer ring shoulder portion (23) into the outer ring member (20) from the outboard side of the vehicle; and
a step of fitting rolling element (33) into each pocket of a plurality of pockets of the cage (35).

9. The method according to claim 7, wherein
the fitting tubular portion (26) of the outer ring member (20) is formed such that a maximum outer diameter (D) of the cage (35) is less than or equal to the bore diameter (B) of the fitting tubular portion, and
the method further comprising:
a step of holding the plurality of rolling elements (33) such that the plurality of rolling elements is arranged on the outer ring raceway surface (22) of the outer ring member (20);
a step of inserting the cage (35) into the outer ring member (20) from the inboard side of the vehicle; and
a step of fitting rolling element (33) into each pocket of a plurality of pockets of the cage (35).

10. The method according to claims 7 or 9, wherein
the cage (35) is formed with a split portion (39) by which the cage (35) is elastically deformed to reduce its diameter, and
the method further comprising:
a step of fitting rolling element (33) into each pocket of a plurality of pockets of the cage (35);
a step of deforming the cage (35) to reduce its diameter by the split portion;
a step of inserting the cage (35) and the plurality of rolling elements (33) through the fitting tubular portion (26); and
a step of restoring the cage (35) to its initial shape after insertion through the fitting tubular portion so that the plurality of rolling elements (33) are arranged on the outer ring raceway surface (22) of the outer ring member (20).

11. The method according to claims 7 or 9, wherein
the cage (135) is formed by a plurality of split cages (135a, 135b) that are split in a circumferential direction, and
the method further comprising:
a step of fitting rolling element (33) into each pocket of a plurality of pockets of the split cages (135a, 135b); and
sequentially inserting the split cages (135a, 135b) through the fitting tubular portion (26), with the plurality of rolling elements (33) fitted in the split cages (135a, 135b), so that the plurality of rolling elements (33) are arranged on the outer ring raceway surface (22) of the outer ring member (20).

## Patentansprüche

1. Wälzlageranordnung für ein Rad, umfassend:
ein Innenringelement (10), das an einem Rad befestigt ist, wobei eine Innenring-Laufringfläche (18, 19) auf einer Außenumfangsfläche des Innenringselements ausgebildet ist;
ein Außenringelement (20) mit einem röhrenförmigen Einpassbereich (26) auf einem innenliegenden Endbereich des Außenringselements, wobei der röhrenförmige Einpassbereich (26) in ein Befestigungsloch (4) eines Fahrzeugaufbauelements (1) eingepasst ist, und wobei eine Außenring-Laufringfläche (21, 22) auf einer Innenumfangsfläche des Außenringelements ausgebildet ist;
eine Mehrzahl von Wälzelementen (32, 33), die zwischen den beiden Innen- und Außenring-Laufringflächen (18, 19, 21, 22) angeordnet sind; und
einen Käfig (34, 35), der die Mehrzahl der Wälzelemente (32, 33) hält, **dadurch gekennzeichnet, dass**:
ein Bohrungsdurchmesser (B) des röhrenförmigen Einpassbereichs (26) des Außenringelements (20) kleiner als ein Umkreisdurchmesser (C) der Wälzelemente (32, 33) ist.

2. Wälzlageranordnung für ein Rad nach Anspruch 1, wobei
ein maximaler Außendurchmesser (D) des Käfigs (35) kleiner als oder gleichgroß wie ein Bohrungsdurchmesser (F) eines Außenring-Schulterbereichs (23) ist, der in Bezug auf die Außenring-Laufringfläche (22) auf einer außenliegenden Seite des Außenringelements ausgebildet ist und der radial nach innen vorragt, und
der Käfig (35) durch den Außenring-Schulterbereich (23) in das Außenringelement (20) von der Außenseite des Fahrzeugs mit der Mehrzahl der in regelmäßigen Abständen auf der Außenring-Laufringfläche (22) angeordneten Wälzelementen eingeführt ist, so dass das Wälzelement (33) in jede Tasche aus einer Mehrzahl von Taschen des
Käfigs (35) eingepasst ist.

3. Wälzlageranordnung für ein Rad nach Anspruch 1, wobei
ein maximaler Außendurchmesser (D) des Käfigs (35) kleiner als oder gleichgroß wie der Bohrungsdurchmesser (B) des Einpassbereichs ist, und
der Käfig (35) in das Außenringelement (20) von der Innenseite des Fahrzeugs mit der Mehrzahl der auf der Außenring-Laufringfläche (22) des Außenringelements (20) angeordneten Wälzelemente (33) eingeführt ist, so dass das Wälzelement (33) in jede Tasche aus einer Mehrzahl von Taschen des Käfigs (35) eingepasst ist.

4. Wälzlageranordnung für ein Rad nach Anspruch 1 oder 3, wobei
der Käfig (35) mit einem Trennbereich (39) ausgebildet ist, durch den der Käfig (35) elastisch verformt wird, um seinen Durchmesser zu reduzieren, und
der Käfig (35) und die Mehrzahl der Wälzelemente (33) durch den röhrenförmigen Einpassbereich (26) des Außenringelements (20) mit dem in jede Tasche aus einer Mehrzahl von Taschen des Käfigs (35) eingepassten Wälzelement (33) eingeführt sind, und wenn der Käfig (35) durch den Spaltbereich (39) verformt wird, um seinen Durchmesser zu reduzieren, und die Ausgangsform des Käfigs (35) danach wieder hergestellt wird, so dass die Mehrzahl der Wälzelemente (33) auf der Außenring-Laufringfläche (22) des Außenringelements (20) angeordnet sind.

5. Wälzlageranordnung für ein Rad nach Anspruch 1 oder 3, wobei
der Käfig (135) durch eine Mehrzahl von getrennten Käfigen (135a, 135b) ausgebildet ist, die in Umfangsrichtung getrennt sind, und
die getrennten Käfige (135a, 135b) nacheinander durch den röhrenförmigen Einpassbereich (26) des Außenringelements (20) mit dem in jede Tasche aus einer Mehrzahl von Taschen der getrennten Käfige eingepassten Wälzelement (33) eingeführt sind, so dass die Mehrzahl der Wälzelemente (33) auf der Außenring-Laufringfläche (22) des Außenringelements (20) angeordnet sind.

6. Wälzlageranordnung für ein Rad nach einem der Ansprüche 1 bis 5, wobei
die Außenring-Laufringfläche (22) als Ausnehmung mit einem halbkreisförmigen Querschnitt in der Innenumfangsfläche des Außenringelements (20) ausgebildet ist.

7. Verfahren zum Herstellen einer Rad-Wälzlageranordnung, umfassend:
einen Schritt des Vorbereitens eines Innenringelements (10), das an einem Rad befestigt ist, wobei eine Innenring-Laufringfläche (18, 19) auf einer Außenumfangsfläche des Innenringelements (10) ausgebildet wird;
einen Schritt des Vorbereitens eines Außenringelements (20) mit einem röhrenförmigen Einpassbereich (26) an einem innenliegenden Endbereich des Außenringelements, wobei der röhrenförmige Einpassbereich (26) in ein Befestigungsloch (4) eines Fahrzeugaufbauelements (1) eingepasst ist, und wobei eine Außenring-Laufringfläche (21, 22) auf einer Innenumfangsfläche des Außenringelements (20) ausgebildet ist;
einen Schritt des Vorbereitens einer Mehrzahl von Wälzelementen (32, 33), die zwischen den beiden Innen- und Außenring-Laufringflächen (18, 19, 21, 22) angeordnet sind; und
einen Sachritt des Vorbereitens eines Käfigs (34, 35), der die Mehrzahl der Wälzelemente (32, 33) hält, **dadurch gekennzeichnet, dass** dieses ferner folgende Schritte umfasst:
einen Schritt des Montierens der Mehrzahl der Wälzelemente (32, 33) und des Käfigs (35) auf der Außenring-Laufringfläche (22);
einen Schritt des Einführens des Innenringelements (10) in das Außenringelement (20), auf dem die Mehrzahl der Wälzelemente (33) und der Käfig (35) montiert wurden, und
einen Schritt des Verstemmens eines innenliegenden Endes des eingeführten Innenringelements (10), um das Außenringelement (20) und das Innenringelement (10) zu befestigen,
wobei das Außenringelement (20) die Außenring-Laufringfläche (22) aufweist, wobei die Außenring-Laufringfläche (22) durch eine derartige Ausnehmung ausgebildet ist, dass ein Bohrungsdurchmesser (B) des röhrenförmigen Einpassbereichs (26) des Außenringelements (20) kleiner als ein Umkreisdurchmesser (C) der Wälzelemente (32, 33) ist.

8. Verfahren nach Anspruch 7, wobei
das Außenringelement (20) einen Außenring-Schulterbereich (23) aufweist, der auf einer in Bezug auf die Außenring-Laufringfläche (22) an einer außenliegenden Seite des Außenringelements ausgebildet ist und der radial nach innen vorragt, wobei ein maximaler Außendurchmesser (D) des Käfigs (35) kleiner oder gleich groß wie ein Bohrungsdurchmesser des Außenring-Schulterbereichs (23) ist, und
das Verfahren ferner umfasst:
einen Schritt des Haltens der Mehrzahl der Wälzelemente (33) in gleichmäßigen Abständen auf der Außenring-Laufringfläche (22);
einen Schritt des Einfügens des Käfigs (35) durch den Außenring-Schulterbereich (23) in das Außenringelement (20) von der Außenseite des Fahrzeugs; und
einen Schritt des Befestigens des Wälzelements (33) in jeder Tasche aus einer Mehrzahl von Taschen des Käfigs (35).

9. Verfahren nach Anspruch 7, wobei
der röhrenförmige Einpassbereich (26) des Außenringelements (20) so ausgebildet ist, dass ein maximaler Außendurchmesser (D) des Käfigs (35) kleiner als oder gleich groß wie der Bohrungsdurchmesser (B) des röhrenförmigen Einpassbereichs ist, und
das Verfahren ferner umfasst:
einen Schritt des Haltens der Mehrzahl der Wälzelemente (33), so dass die Mehrzahl der Wälzelemente auf der Außenring-Laufringsfläche (22) des Außenringelements (20) angeordnet ist;
einen Schritt des Einführens des Käfigs (35) in das Außenringelement (20) von der Innenseite des Fahrzeugs; und
einen Schritt des Einpassens eines Wälzelements (33) in jede Tasche aus einer Mehrzahl von Taschen des Käfigs (35).

10. Verfahren nach Anspruch 7 oder 9, wobei
der Käfig (35) mit einem Trennbereich (39) ausgebildet ist, durch den der Käfig (35) elastisch verformt wird, um seinen Durchmesser zu reduzieren, und das Verfahren ferner umfasst:
einen Schritt des Einpassens eines Wälzelements (33) in jede Tasche aus einer Mehrzahl von Taschen des Käfigs (35);
einen Schritt des Verformens des Käfigs (35), um seinen Durchmesser durch den Trennbereich zu reduzieren;
einen Schritt des Einführens des Käfigs (35) und der Mehrzahl der Wälzelemente (33) durch den röhrenförmigen Einpassbereich (26); und
einen Schritt des Wiederherstellens des Käfigs (35) in seine Ausgangsform nach dem Einfügen durch den röhrenförmigen Einpassbereich, so dass die Mehrzahl der Wälzelemente (33) auf der Außenring-Laufringfläche (22) des Außenringelements (20) angeordnet sind.

11. Verfahren nach Anspruch 7 oder 9, wobei
der Käfig (135) durch eine Mehrzahl von getrennten Käfigen (135a, 135b) ausgebildet ist, die in Umfangsrichtung getrennt sind, und
das Verfahren ferner umfasst:
einen Schritt des Einpassens eines Wälzelements (33) in jede Tasche aus einer Mehrzahl von Taschen der getrennten Käfige (135a, 135b); und
aufeinanderfolgendes Einführen der getrennten Käfige (135a, 135b) durch den röhrenförmigen Einpassbereich (26) mit der Mehrzahl der Wälzelemente (33), die in die getrennten Käfige (135a, 135b) eingepasst sind, so dass die Mehrzahl der Wälzelemente (33) auf der Außenring-Laufringsfläche (22) des Außenringelements (20) angeordnet ist.

## Revendications

1. Ensemble de roulement de roue, comprenant :
un élément de bague intérieure (10) qui est fixé à une roue, dans lequel une surface de chemin de roulement de bague intérieure (18, 19) est formée sur une surface périphérique extérieure de l'élément de bague intérieure ;
un élément de bague extérieure (20) comportant une partie tubulaire de montage (26) en une partie d'extrémité interne de l'élément de bague extérieure, dans lequel la partie tubulaire de montage (26) est montée dans un trou de fixation (4) d'un élément de carrosserie de véhicule (1), et dans lequel une surface de chemin de roulement de bague extérieure (21, 22) est formée sur une surface périphérique intérieure de l'élément de bague extérieure ;
une pluralité d'éléments roulants (32, 33) disposés entre les deux surfaces de chemin de roulement intérieure et extérieure (18, 19, 21, 22) ; et
une cage (34, 35) qui maintient la pluralité d'éléments roulants (32, 33), **caractérisé en ce que** :
un diamètre d'alésage (B) de la partie tubulaire de montage (26) de l'élément de bague extérieure (20) est inférieur à un diamètre de cercle circonscrit (C) des éléments roulants (32, 33).

2. Ensemble de roulement de roue selon la revendication 1, dans lequel
un diamètre extérieur maximum (D) de la cage (35) est inférieur ou égal à un diamètre d'alésage (F) d'une partie d'épaulement de bague extérieure (23) qui est formée sur un côté externe de l'élément de bague extérieure par rapport à la surface de chemin de roulement de bague extérieure (22), et qui fait saillie radialement vers l'intérieur, et
la cage (35) est insérée à travers la partie d'épaulement de bague extérieure (23) dans l'élément de bague extérieure (20) depuis le côté externe du véhicule, la pluralité d'éléments roulants (33) étant agencés à intervalles réguliers sur la surface de chemin de roulement de bague extérieure (22), de telle manière que l'élément roulant (33) est monté dans chaque poche d'une pluralité de poches de la cage (35).

3. Ensemble de roulement de roue selon la revendication 1, dans lequel
un diamètre extérieur maximum (D) de la cage (35) est inférieur ou égal au diamètre d'alésage (B) de la partie de montage, et
la cage (35) est insérée dans l'élément de bague extérieure (20) depuis le côté interne du véhicule, la pluralité d'éléments roulants (33) étant agencés sur la surface de chemin de roulement de bague extérieure (22) de l'élément de bague extérieure (20), de telle manière que l'élément roulant (33) est monté dans chaque poche d'une pluralité de poches de la cage (35).

4. Ensemble de roulement de roue selon les revendications 1 ou 3, dans lequel
la cage (35) est formée avec une partie coupée (39) par laquelle la cage (35) est élastiquement déformée pour réduire son diamètre, et
la cage (35) et la pluralité d'éléments roulants (33) sont insérés à travers la partie tubulaire de montage (26) de l'élément de bague extérieure (20), l'élément roulant (33) étant monté dans chaque poche d'une pluralité de poches de la cage (35), et dans lequel la cage (35) est déformée par la partie coupée (39) pour réduire son diamètre, et la forme initiale de la cage (35) est ensuite restaurée de telle manière que la pluralité d'éléments roulants (33) sont agencés sur la surface de chemin de roulement de bague extérieure (22) de l'élément de bague extérieure (20).

5. Ensemble de roulement de roue selon les revendications 1 ou 3, dans lequel
la cage (135) est formée par une pluralité de cages coupées (135a, 135b) qui sont coupées dans une direction circonférentielle, et
les cages coupées (135a, 135b) sont insérées séquentiellement à travers la partie tubulaire de montage (26) de l'élément de bague extérieure (20), l'élément roulant (33) étant monté dans chaque poche d'une pluralité de poches des cages coupées (135a, 135b), de telle manière que la pluralité d'éléments roulants (33) sont agencés sur la surface de chemin de roulement de bague extérieure (22) de l'élément de bague extérieure (20).

6. Ensemble de roulement de roue selon l'une quelconque des revendications 1 à 5, dans lequel
la surface de chemin de roulement de bague extérieure (22) est formée comme un évidement avec une section transversale demi-circulaire dans la surface périphérique intérieure de l'élément de bague extérieure (20).

7. Procédé de fabrication d'un ensemble de roulement de roue, comprenant :
une étape consistant à préparer un élément de bague intérieure (10) qui est fixé à une roue, dans lequel une surface de chemin de roulement de bague intérieure (18, 19) est formée sur une surface périphérique extérieure de l'élément de bague intérieure (10) ;
une étape consistant à préparer un élément de bague extérieure (20) comportant une partie tubulaire de montage (26) en une partie d'extrémité interne de l'élément de bague extérieure, dans lequel la partie tubulaire de montage (26) est montée dans un trou de fixation (4) d'un élément de carrosserie de véhicule (1), et dans lequel une surface de chemin de roulement de bague extérieure (21, 22) est formée sur une surface périphérique intérieure de l'élément de bague extérieure (20) ;
une étape consistant à préparer une pluralité d'éléments roulants (32, 33) disposés entre les deux surfaces de chemin de roulement intérieure et extérieure (18, 19, 21, 22) ; et
une étape consistant à préparer une cage (34, 35) qui maintient la pluralité d'éléments roulants (32, 33), **caractérisé en ce qu'**il comprend en outre :
une étape consistant à assembler la pluralité d'éléments roulants (33) et la cage (35) sur la surface de chemin de roulement de bague extérieure (22) ;
une étape consistant à insérer l'élément de bague intérieure (10) dans l'élément de bague extérieure (20) sur lequel la pluralité d'éléments roulants (33) et la cage (35) ont été assemblés ; et
une étape consistant à mater une extrémité interne de l'élément de bague intérieure (10) pour fixer l'élément de bague extérieure (20) et l'élément de bague intérieure (10),
dans lequel l'élément de bague extérieure (20) comporte la surface de chemin de roulement de bague extérieure (22), dans lequel la surface de chemin de roulement de bague extérieure (22) est formée par un évidement tel qu'un diamètre d'alésage (B) de la partie tubulaire de montage (26) de l'élément de bague extérieure est inférieur à un diamètre de cercle circonscrit (C) des éléments roulants (33).

8. Procédé selon la revendication 7, dans lequel
l'élément de bague extérieure (20) comporte une partie d'épaulement de bague extérieure (23) qui est formée sur un côté externe de l'élément de bague extérieure par rapport à la surface de chemin de roulement de bague extérieure (22) et qui fait saillie radialement vers l'intérieur, dans lequel un diamètre extérieur maximum (D) de la cage (35) est inférieur ou égal à un diamètre d'alésage de la partie d'épaulement de bague extérieure (23), et
le procédé comprenant en outre :
une étape consistant à maintenir la pluralité d'éléments roulants (33) à intervalles réguliers sur la surface de chemin de roulement de bague extérieure (22) ;
une étape consistant à insérer la cage (35) à travers la partie d'épaulement de bague extérieure (23) dans l'élément de bague extérieure (20) depuis le côté externe du véhicule ; et
une étape consistant à monter l'élément roulant (33) dans chaque poche d'une pluralité de poches de la cage (35).

9. Procédé selon la revendication 7, dans lequel
la partie tubulaire de montage (26) de l'élément de bague extérieure (20) est formée de telle manière qu'un diamètre extérieur maximum (D) de la cage (35) est inférieur ou égal au diamètre d'alésage (B) de la partie de montage, et
le procédé comprenant en outre :
une étape consistant à maintenir la pluralité d'éléments roulants (33) de telle manière que la pluralité d'éléments roulants est agencée sur la surface de chemin de roulement de bague extérieure (22) de l'élément de bague extérieure (20) ;
une étape consistant à insérer la cage (35) dans l'élément de bague extérieure (20) depuis le côté interne du véhicule ; et
une étape consistant à monter l'élément roulant (33) dans chaque poche d'une pluralité de poches de la cage (35).

10. Procédé selon les revendications 7 ou 9, dans lequel
la cage (35) est formée avec une partie coupée (39) par laquelle la cage (35) est élastiquement déformée pour réduire son diamètre, et
le procédé comprenant en outre :
une étape consistant à monter l'élément roulant (33) dans chaque poche d'une pluralité de poches de la cage (35) ;
une étape consistant à déformer la cage (35) pour réduire son diamètre par la partie coupée ;
une étape consistant à insérer la cage (35) et la pluralité d'éléments roulants (33) à travers la partie tubulaire de montage (26) ; et
une étape consistant à restaurer la forme initiale de la cage (35) après l'insertion à travers la partie tubulaire de montage de telle manière que la pluralité d'éléments roulants (33) sont agencés sur la surface de chemin de roulement de bague extérieure (22) de l'élément de bague extérieure (20).

11. Procédé selon les revendications 7 ou 9, dans lequel
la cage (135) est formée par une pluralité de cages coupées (135a, 135b) qui sont coupées dans une direction circonférentielle, et
le procédé comprenant en outre :
une étape consistant à monter l'élément roulant (33) dans chaque poche d'une pluralité de poches des cages coupées (135a, 135b) ; et
d'insérer séquentiellement les cages coupées (135a, 135b) à travers la partie tubulaire de montage (26), la pluralité d'éléments roulants (33) étant montés dans les cages coupées (135a, 135b), de telle manière que la pluralité d'éléments roulants (33) sont agencés sur la surface de chemin de roulement de bague extérieure (22) de l'élément de bague extérieure (20).
